# EUROPEAN PATENT APPLICATION

(11) **EP 1 881 364 A1**
(43) Date of publication of application: **23.01.2008**
(21) Application number: 07012744.4
(22) Date of filing: 29.06.2007
(51) Int. Cl.: G02F 1/13357, F21K 7/00, G02B 6/00

(54) **Light source having enhanced mixing**

(30) Priority: 19.07.2006 US 488654
(71) Applicant: BARCO N.V., 8500 Kortrijk (BE)
(72) Inventor: Stuyven, Gert, 9040 Sint-Amandsberg (BE)
(74) Representative: Bird, Ariane

(57) **Abstract**

A panel light emitter such as a backlight for displays, has light sources of different colours, (20, 420), a cavity (30) illuminated by the light sources, to mix the light, the cavity having an output surface (35), to output some of the light and a partially reflective coating or layer (40, 440), to provide enhanced reflection back into the cavity of the light incident on the output surface, more than occurs from a difference of refractive index between the output surface and the cavity. The enhanced reflection is non selective of wavelength or polarization. The partially reflective film or coating can be a reflective material having a pattern of apertures. The enhanced reflection can help provide more mixing in the cavity for a given depth of cavity, or enable the depth to be reduced for example.

## Description

**Field of the invention**: This invention relates to panel light emitters such as backlights for displays, and to such displays, and to corresponding methods of manufacturing and operating such displays.

### Description of the Related Art:

There is a general requirement to provide panel light sources with a specific colour and preferably a uniform luminescence and colour over the surface area of the source. A traditional technique is to use light emitters of different colours, e.g. primary colours or colour filters, e.g. primary colour filters to set a particular colour, e.g. white of a certain colour temperature. Various techniques have been used to provide uniformity of luminescence, e.g. the use of diffusers.

A number of techniques have been described in the past to achieve high uniformity display systems. One possibility is to use electronic pre-correction of the image signal. In the limit this can be done up to pixel level. It involves altering values in a frame buffer. This means that for each pixel the pixel data sent to that pixel is adapted in order to achieve a more uniform image on the complete display.

Another issue is uniformity of colour across the display. This is a particular issue for displays using a plurality of discrete light sources such as LEDs as light sources for backlights as an alternative to fluorescent lamps. Backlights are typically the light sources for transmissive panel displays, e.g. liquid crystal displays. For example, in display applications, the use of LEDs of 3 or more different types, each emitting light of another colour, is of particular interest. The colours are usually primary colours. A usual choice is to use red, green and blue LEDs since they correspond with the 3 primary colours that are used in additive colour mixing and they allow display of many different colours.

LED backlighting is promising to be one of the selling features for high-end LCD-TV and monitor applications. One reason for this is the wide color gamut that can be realized (greater than required for NTSC), using saturated red, green and blue emitting LED's. Trends such as scanning backlight, black frame insertion and the like also strongly favor backlight technologies that make use of fast switching light sources like LED. Other characteristics of LED's that are also appreciated are their long lifetime and gradual brightness decrease (i.e. virtually no sudden failure).

LED efficiency has recently started approaching the values of fluorescent light sources (CCFL, HCFL), making the implementation of LED backlighting much more feasible. However, the use of LED's for backlighting puts severe challenges on the backlighting design. Because LED's are essentially point sources, the task of achieving uniform brightness and color mixing over the display surface is more difficult than for conventional fluorescent light sources, where simple diffusion and light recirculation can suffice.

A LED typically has one single relatively small peak in its emission spectrum, and it is therefore possible to manufacture LEDs emitting light of highly saturated red, green and blue colours. A wider colour gamut can be obtained from a mix of such highly saturated R, G, and B LEDs than from a backlight in which conventional fluorescent lamps having a phosphor mix coating on their glass wall are used. The use of LEDs of 3 different colours has the extra advantage that the colour of the resulting mix that exits the backlight, can be selected to lie on any point within a large gamut area within the colour triangle, simply by properly adapting the current drive of the 3 types of LEDs. It is therefore possible to generate white light of any desired colour temperature, and to change that colour temperature according to the needs of the display user. This is not only interesting for colour displays, but even for monochrome LCDs, that are often used in medical applications. This approach even enables the display of different colours on a monochrome LCD panel by sequencing the drive of the R, G and B LEDs in the backlight in time. However, this is only practical if the response time of the LCD is fast enough so that the sequencing can be done fast enough as to prevent annoying flicker on the display.

For all those reasons, a mix of R, G and B LEDs is preferred over the use of monochrome white LEDs in backlights for displays. One practical problem in realising a backlight with LEDs of different types of colours is that all colours have to be mixed very well first before the resulting mix can be coupled out of the backlight and sent to the display panel.

If the mixing is not done well in space, the colour of the resulting white mix will not be uniform over the active area of the display, and since the human eye is very sensitive to even small variations of the colour coordinates on a white field, this will be noticed soon by the display user, much sooner than luminance variations would be noticed. The colour mixing problem cannot easily be solved by simple means when power LEDs are used, as is the case in most backlights, because they are relatively far apart from each other to make it possible to dissipate and sink the produced heat. The problem of mixing the colours in space doesn't disappear if colour sequencing in time is used.

In the current state of the art, the colour mixing problem in backlights is partly solved by assuring that all light rays coming from LED sources have travelled a minimum distance through some mixing medium before they can be coupled out of the backlight. Several LED backlighting approaches have already been demonstrated or published to achieve such colour mixing. These can be divided by type of backlighting, direct or edge-type backlighting, and by LED type, low power (current = 20mA typ.) or high power (current = 350mA typ.).

Using low-power LED's, the packages can be arranged either at the edge of a light guide or in a matrix directly below the LCD. The package can consist of either a single die or can contain 3 dies (red, green and blue) (e.g. multileds from Osram and Nichia). While the use of such low-power LED's results in a simple backlighting concept (and efficient if direct backlighting), the large number of LED packages needed for high brightness applications or for large display sizes tends to make this concept impractical and costly.

On the other hand, when high-power LED's are used, the use of a relatively low number of discrete red, green and blue LED's increases the complexity of the backlight design, but offers the lowest cost per lumen. Moreover, the highest LED efficiencies at this moment are achieved only by the high-power LEDs, such as e.g. the 'Luxeon' LED's from Lumileds, with efficacies reaching values (typical) of 55 lm/W (red-orange, 617 nm), 50 lm/W (green, 525 nm), 16 lm/W (blue, 465 nm). Other manufacturers, such as Osram, Cree, or others, have similar high-power LED packages available reaching comparable efficiencies.

In backlights of the edge-lit type, the colour mixing can be done in several ways. In one published approach, this is realised by using 2 light guides, each illuminated on one edge, instead of one single guide illuminated on 2 opposite edges. In each of both light guides, outcoupling means, e.g. white painted dots on the back surface, only start to be present near the middle of the active area, so that the light rays have to travel at least through 1/3 of the length of the light guide, where they are confined to stay in the light guide by total internal reflection, before they have any chance to hit an outcoupling means that permits some of the light to be coupled out. There should be some overlap between the outcoupling means of both light guides in the middle of the active area so that the entire display area is illuminated. There are several disadvantages in this approach: the thickness and weight of the backlight almost doubles and the cost increases; unless the white balance of the light mix of the LEDs is perfectly equal for both LED arrays illuminating each separate light guide, a discontinuity in colour will be perceived in the middle of the screen. It is also difficult to achieve luminance continuity in the middle of the screen for all viewing angles: if the current of both LED arrays is adjusted to achieve luminance uniformity for on-axis view (perpendicular to the screen), there is no guarantee that the luminance will be uniform in the middle at large viewing angles, because the structure is not symmetrical: one light guide is further away from the panel than the other, creating parallax and its emitted light must first travel through the other guide before it hits the diffuser.

Several other edge-lit types of backlighting approaches exist, based on e.g. separate colour mixing light guides and outcoupling light guides, and are well-known by those skilled in the art. Generally, the use of light guides tends to make the backlight construction more heavy, complicated and costly. In addition, the use of edge-lit type backlighting puts an upper limit on the display brightness that can be achieved, because of the limitation on the number of LEDs that can physically be placed at the edges of the light guide. It is therefore believed that edge-lit type backlighting is not very suitable for large display sizes nor for high-brightness display applications.

For all of these reasons, both LED and backlight manufacturers have come up with various direct-type LED backlighting approaches to realize the color mixing of discrete R, G and B LEDs in an as small as possible space envelope. An example of a direct backlighting system using differently coloured LEDs as light sources is described by R.S. West et al in SID 03 Digest (2003) p 1262. The direct backlight system described comprises 2 rows of coloured light sources - red, green and blue high power side-emitting LEDs - positioned in a 50 mm deep cavity. Inside the cavity, an acrylic or glass plate is placed in close proximity with the LEDs, with diverter elements directly above the LEDs to block the on-axis emission that is directed directly towards the LCD. The cavity is completed by a reflective bottom and reflective sidewalls, combined with the use of a diffuser plate and brightness enhancement films behind the LCD screen. The 50 mm thickness is required to achieve an acceptable colour uniformity. The height of the backlight is not less than 50 mm as additional components, such as e.g. a diffuser plate, are necessary. Furthermore, the centre-to-centre distance of the high power LEDs is small, which may result in heating problems and limits the possibilities to further increase the brightness by providing more light sources.

Another example of a direct backlighting system is described by OSRAM on the company website. In this case, the side-emitting LEDs are arranged in closely-spaced clusters of 4 LED's, two green, one red and one blue, which allows to achieve a good colour mixing without the need for a very large mixing distance. Still, a backlight thickness of 40 mm is needed to achieve an acceptable luminance uniformity.

Other direct LED backlighting approaches exist, but in general, such backlight systems using light sources having different colours tend to require a larger backlight thickness, in order to achieve good colour mixing. These concepts are not able to realize efficient color mixing with a small backlight depth (< 20-25 mm) and using a simple, low-weight and easy-to-manufacture construction.

European patent publication EP1640756 with applicant Barco N.V., shows a thin illumination system with relatively good luminance uniformity, efficiency and colour mixing uniformity, even if different light sources emitting different colours are used. A plurality of light sources, placed in cylindrical niches in a light guiding means, couple their light sideways into the guiding means. A specially structured surface pattern on the outgoing face of the guiding means is used in combination with light in-coupling parallel to the plane of light out-coupling of the light guiding means. This means the light then is only coupled out after it has been in the light guiding means for a significantly long time such that the light emanating from different light sources (102) is well mixed. The colour mixing is controlled by the characteristics of the structured surface pattern. Using such a hybrid LED backlighting system (as it combines characteristics both of direct-type and edge-type backlights) allows to realise a much thinner form factor (less than 20 mm) than conventional direct backlighting approaches, but again requires the construction of a not-easy-to-manufacture and heavy light guide.

### Summary of the Invention:

An object of the invention is to provide improved panel light emitters such as backlights for displays, and to such displays, and to corresponding methods of manufacturing and operating such displays. According to a first aspect, the invention provides:
A panel light emitter having two or more light sources, a cavity arranged to be illuminated by the light sources, the cavity having one or more internally reflective surfaces, and an output surface, to output some of the light from the cavity incident on the output surface, and to reflect some of this light back into the cavity, and
   a partially reflective element, to provide enhanced reflection back into the cavity of the light incident on the output surface, more than occurs from a difference of refractive index between the output surface and the cavity.
   Such enhanced reflection can help provide more mixing in the cavity for a given depth of cavity, or enable the depth to be reduced for example. It involves a recognition that the prevailing principle of minimizing reflections or losses in the output path is not necessarily optimal.
   Any additional features can be added, and some additional features are described and claimed below. The invention also provides displays having such panel light emitters.
   Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Fig 1 shows a schematic cross section view of a known panel light emitter,
Fig 2 shows a schematic cross section view of an embodiment of the invention,
Fig 3 shows a schematic cross section view of another embodiment of the invention, and
Fig 4 shows two examples of a patterned reflecting film with (a) rectangular holes, and (b) rectangular stripes, for use in embodiments of the invention.

### Description of the Preferred Embodiments:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

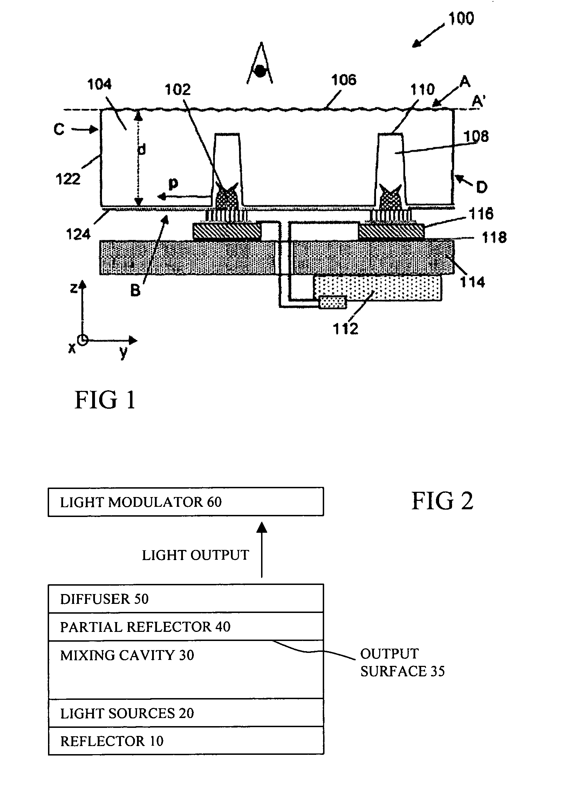

By way of introduction to the description of embodiments, a system known from above mentioned European patent publication EP1640756 and shown in Fig 1 will be described briefly, to help enable the differences of the embodiments of the invention to be understood. The illumination system 100 shows a number of light sources 102 and a light guiding means 104 having a specially structured surface pattern 106, by way of example illustrated in Fig. 1 as geometrical features at the light out-coupling side A of the light guiding means 104. A number of light sources 102 having different colours can be used, which need good colour mixing. The light guiding means 104 has a light out-coupling side A, also referred to as illumination side or viewing side, through which light is coupled out, a back side B, positioned opposite to the light out-coupling side A, and edge sides C to F (E and F are not shown in Fig. 1 as they are positioned in front of and behind the plane of the drawing respectively). For convenience of explanation, a reference x,y,z co-ordinate system is defined, whereby light out-coupling side A and back side B are substantially oriented parallel with the x,y plane, also referred to as the horizontal direction, whereas edge sides C and D are substantially oriented along x,z planes and edge sides E and F (not shown in Fig. 1) are substantially oriented parallel with the y-z plane, both referred to as vertical direction. Depending on the specific application the illumination system 100 is used in, the light out-coupling side A and back side B may be a large out-coupling area, e.g. if the illumination system 100 is used for advertising or as a backlight in a large non-emissive display system.

It is desirable to prevent light rays from propagating substantially perpendicular to the reference plane A', coupling in into the light guiding means 104 at the top of the niche 108 and going straight through the light guiding means 104 or through the hole in the light guiding means 104, to be directly emitted from the light out-coupling side A. This can be prevented by placing a light blocking means 110 near the top surface of the holes or niches 108, as e.g. shown in Fig. 1. The light blocking means 110 may be part of the light source 102 or may be connected, i.e. fixed such as glued or deposited e.g. by CVD, to the light guiding means 104.

The specially structured surface pattern 106, which defines the light out-coupling surface A and/or the bottom surface B, however, is not perfectly flat and when a light ray hits that surface, the vertical component of its propagation vector will be altered a little bit. The resulting effect will be that the incident angle of a light ray will gradually increase with each hit on the structured surface, but never more than twice the inclination angle that the local normal on the structured surface makes with the normal on the reference plane, until the condition for total internal reflection is no longer met. If the condition for total internal reflection is no longer met, the light will be coupled out of the light guide 104 either on the A or B side. Light out-coupling can only happen after the ray has traveled over a significant path length in the light guide 104 so that it has been subject to several hits with A. There is almost as much chance that the ray will escape on the bottom side as on the top side, so that a film 124 having good reflection properties must be placed under the bottom plane B if only light out-coupling through light out-coupling surface A is to be achieved with a good optical efficiency.

Depending on the light sources 102 used, the light sources 102 can be positioned immediately in holes or niches 108, or they can be positioned under the holes or niches 108 and the light can be directed to and in these holes or niches 108. It is preferred to use light sources 102 that can be positioned in the holes or niches 108 such that less space is lost. Both conventional, non side-emitting light sources such as cold cathode fluorescence light sources and conventional light emitting diodes and less conventional, side-emitting light sources, such as side-emitting light emitting diodes can be used.

The system may e.g. comprise a driving means 112 for driving the light sources 102. Heating problems may be prevented by applying a heat sink 114 e.g. connected to a light source carrier 116 by thermally conductive glue or solder 118. This carrier 116 may be e.g. a piece of interconnection substrate, such as e.g. a printed circuit board. It may be a metal core printed circuit board (MCPCB) on which the LEDs are soldered or glued.

The four edges C to F of the light guiding means 104, i.e. the edges shown parallel with the x-z and y-z planes, can be covered with a reflecting film 122 with the reflecting surface as close as possible to the edges C to F to minimise light leakages. Such a film may e.g. be a reflecting dielectric film glued onto the light guiding means 104 with a pressure sensitive adhesive, such as a specular reflecting film, to support uniformity of the light spreading. At the back side B of the light guiding means 104 also a reflecting film 124, preferably a white diffuse reflecting film, may be applied to prevent loss of light due to out-coupling through the backside B.

Some of the embodiments of the invention have a slim, light-weight LED backlighting concept where the backlight depth is drastically reduced by adding a partially reflecting film or coating between the LED's and the diffuser. As a consequence, the mixing distance is increased, hence luminance/color uniformity is improved without the need for additional backlight depth or complex, weight-adding and costly components. Some embodiments of the invention use a patterned highly reflecting film with negligible absorption, which is laminated onto the rear surface of the diffuser. Notably some embodiments involve combining key characteristics into one relatively simple backlight construction.

As shown in Figure 2 in cross section, a panel light emitter has a layered structure with the following layers. Other layers and features can be added. Light sources 20 illuminate a mixing cavity 30. The light sources can be in the cavity or can illuminate it from outside, for example from its edges, or from points distributed over a back surface of the cavity opposing the output surface 35. A partial reflector element 40 is shown in an output path of the light from the cavity, between the cavity and a diffuser 50. A reflector 10 may be used behind the light sources to improve efficiency, and may be incorporated as a back surface of the mixing cavity. The panel light emitter can be used with or incorporated with a light modulator 60 to form a panel display. The light modulator can be an active device such as a pixel controlled LCD layer, or a passive layer such as a printed film to create an illuminated advert. Alternatively to the light modulator, or as well, the light sources 20 can be actively controlled to alter the display. The panel display can be incorporated in any kind of system, and multiple panels can be used together, each showing part of a larger displayed image.

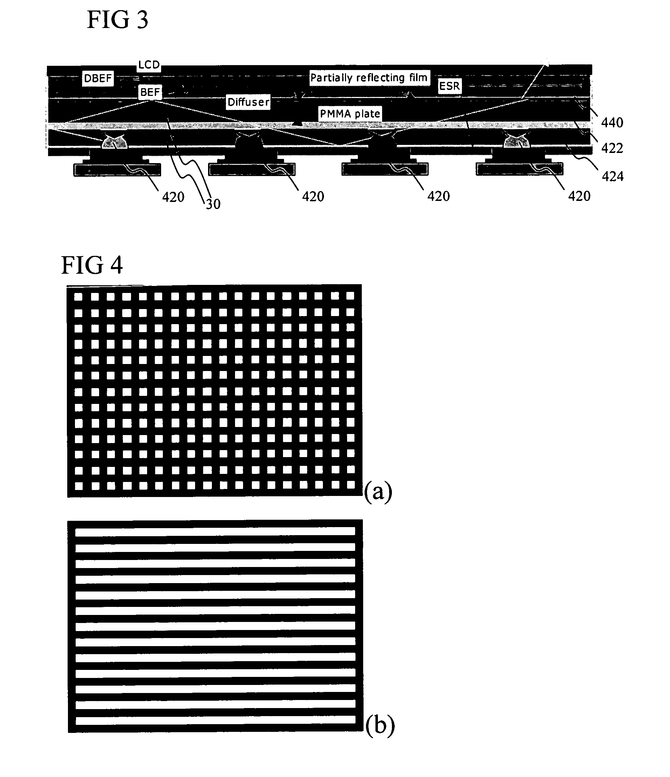

Another embodiment is shown in cross section in Fig 3, of a backlight without the light modulator, though of course it can be used with a light modulator. More detail is shown than in Fig 2, though many other variations are possible to suit the application. The backlight structure depicted in the schematic cross-sectional view uses a similar structure as the known direct LED backlight concept mentioned above of Lumileds (and is also similar to the structure of fig 1), but differs in some notable features.

An overview of the main backlight components and their functionality now follows:
- Side-emitting power LED's 420. Known Lumileds side emitters can be used and have a special-shaped lens cap that refracts almost all of the light emitted by the die into a narrow cone in the horizontal plane (between 70-80 degrees from normal); only a small fraction of the light is emitted in (close to) a normal direction. Side-emitting LED's are useful for LCD backlighting applications because they facilitate the color mixing process (by increasing the mixing distance for a given cavity depth). The LED's can be placed in arrays, in RGGB clusters or, preferably, uniformly distributed below the display surface. The applicability of the invention is not limited to side-emitting LED's, but this type of LED is advantageous for achieving a minimal backlight depth.
- (Optionally) Thin PMMA (or glass) sheet 422 with white diffuse reflecting paint or foil dots directly above the LED's. Like Lumileds' backlight concept, these serve to block the light that is not emitted in the horizontal plane, and hereby avoid the existence of 'hot spots' on the display surface at each LED location. The presence of this sheet is not essential to embodiments of this invention, but is useful in some cases. If this PMMA sheet is not used, a further simplification of the mechanical construction and hence reduced costs can be achieved.
- Backlight cavity 30, above and below the PMMA plate, with a certain depth. Since LED's are point sources, a certain backlight depth is required to allow for color mixing (in air). The minimum depth that is needed for this is dictated by the uniformity requirements (luminance/color) for on the display. In Lumileds' backlight concept, a depth of 40-50 mm is needed to realise sufficient color mixing; despite this depth, the location of the LED modules is still very apparent on a white display screen.
- Specular reflecting film (or coating) 424 covering the edges and the bottom of the backlight cavity. The specular properties are not essential but can help ensure that the emitted light rays are reflected at an angle which is still close to the horizontal plane, to keep the mixing distance as long as possible. In addition, the absorption should be as low as possible since the emitted light rays will hit the reflecting surfaces several times before being redirected towards the LCD.
- Diffuser and brightness enhancement films (such as BEF, DBEF) for backlight diffusion and angular light control (to tailor the angular light distribution in accordance with the requirements of the application). These films can be identical or similar to the ones used in any other backlight, and do not need further explanation.
- A partially reflecting film 440. Embodiments of the backlight can be similar to known arrangements, with the notable introduction of a partially reflecting film (or coating) between the LED's and the diffuser. By definition, this film/coating will result in extra light recirculation by reflecting a fraction of the light rays while another fraction will be transmitted. The fraction of the light rays that needs to be reflected by this film/coating is dependent on the level of uniformity that is required and the backlight depth available, but can be anywhere between 20 and 80 %, preferably between 30 and 60%. As a consequence, the mixing distance will increase for the same depth. In contrast to the minimum depth of 40-50 mm that is required by Lumiled's known concept, and other known backlights, this depth can be reduced to 20-25 mm using embodiments of the invention. In examples where the mixing is done in air, (so no light guide material is needed in the cavity), a high backlight efficiency is possible.

The scope of the claims of the invention is not limited to one specific implementation only as described; one could use e.g. a partially reflecting coating with uniform characteristics, such as a multilayered interference coating, or alternatively, a (highly) reflecting film that is patterned to obtain a well-defined aperture ratio. While the former implementation may seem more straightforward, the angle dependency of interference coatings will cause an undesired chromaticity shift with viewing angle. In contrast to this, a patterned reflecting film does not suffer from these issues. The reflection-to-transmission ratio is also very easy to control: two examples are given in figure 4, many others can be envisaged. In the example shown in figure 4(a), the partial reflection and transmission is achieved by patterning rectangular holes in a reflecting film, e.g. by laser cutting. The dimensions can be arranged to suit the application and desired reflection-to-transmission ratio, for example, the holes can be squares with each side having a size that is 2^{-1/2} of the pitch between the holes. In this case the proportion of the light that is reflected will be 50%. The pitch between the holes can be 2 mm and sides of the squares 2^{1/2} mm, but other pitch values can as well be used. Similarly, other ratios between square size and pitch can be used, resulting in a different reflection-to-transmission ratio. Similarly also, other patterns can be thought of to realise the partial reflection and transmission properties, such as circles or stripes (as in figure 4(b)). The distance of the partially reflecting coating/film from the bottom of the cavity can be anywhere between 5 mm and 50 mm, preferably between 15 mm and 20 mm.

Furthermore, the use of a patterned specular reflecting film offers more flexibility to the design: by modifying the aperture ratio and distance from the LED's, one can tailor the backlight characteristics depending on the application, to optimize for backlight efficiency, color/luminance uniformity or backlight depth. Also, in some applications, such as television, it might be advantageous to have a gentle luminance fall-off from the center towards the edges of the display, similar to the luminance distribution also observed on CRT displays; this can easily be achieved by creating a non-uniform pattern in the reflecting film.

The output surface of the cavity will have some intrinsic reflection of light back into the cavity where the light is incident at an angle away from the normal, caused by the difference of refractive indices. This is normally minimized, and it is intended that the enhanced reflection of the embodiments is reflection caused deliberately to exceed this usual amount of reflection.

An example of a suitable kind of reflecting material is ESR from 3M, with a reflectivity of about 98% and negligible absorption (the remained 2% are transmitted, rather than absorbed). This film can be applied onto a separate sheet of glass or PMMA between the LED's and the diffuser, or preferably, can be laminated onto the rear surface of the diffuser. As a consequence, the extra film/coating need not cause a significant weight increase.

The location of the partially reflecting element can be varied, provided it is on the output light path. For example it can be after the diffuser though this could make it harder to arrange for all the reflections to reach the cavity. In principle the partially reflective element could be formed on the output surface or just inside the cavity, to intercept light on its way out of the cavity through the output surface. However, the preferred location will be before the diffuser, because otherwise the pattern of the partially reflecting element may be visible through the display.

As has been described above, the embodiments of the invention can involve any kind of partially reflective element to enable more mixing in the cavity or a slimmer cavity. Additional features can involve the enhanced reflection being non selective. For example it can be of all wavelengths and polarizations. The partially reflective element can comprise a substantially reflective material having a pattern of apertures. The material can comprise a layer or a coating on a layer. The pattern can comprise a non uniform pattern.

The emitter can comprise a diffuser in a light output path. The diffuser can be arranged after the partially reflective element in the light output path to help direct the reflected light back to the cavity and reduce losses. The partially reflective element can comprise a layer laminated on the diffuser. The sources can comprise side emitting sources arranged to emit predominantly in the plane of the panel. The sources can comprise different coloured LED sources. A depth of the cavity normal to a plane of the panel can be less than 35mm.

The partially reflective element can be arranged to reflect a proportion of the incident light, the proportion being any of: at least 30%, at least 40% or at least 50%, or at least 60%.

Other aspects of the invention can include display devices incorporating the panel light emitter, any type of systems such as multipanel display systems, desktop or other computing systems incorporating the display devices. Other aspects can include methods of using the panel light emitter, and methods of manufacturing the same. Although described with reference to backlights, it can be applied to other applications for light emitters, such as household lighting or automotive lights. Other variations and applications can be envisaged within the claims.

## Claims

1. A panel light emitter having two or more light sources (20, 420), a cavity (30) arranged to be illuminated by the light sources, the cavity having one or more internally reflective surfaces, and an output surface (35), to output some of the light from the cavity incident on the output surface, and to reflect some of this light back into the cavity, and a partially reflective element (40, 440), to provide enhanced reflection back into the cavity of the light incident on the output surface, more than occurs from a difference of refractive index between the output surface and the cavity.

2. The panel light emitter of claim 1, the enhanced reflection being non selective.

3. The panel light emitter of claim 2, the enhanced reflection being non selective of wavelength or polarization.

4. The panel light emitter of any preceding claim, the partially reflective element comprising a substantially reflective material having a pattern of apertures.

5. The panel light emitter of claim 4, the material comprising a layer or a coating on a layer.

6. The panel light emitter of claim 4 or 5, the pattern comprising a non uniform pattern.

7. The panel light emitter of any preceding claim, the emitter comprising a diffuser (50) in a light output path.

8. The panel light emitter of claim 7, the diffuser being arranged after the partially reflective element in the light output path.

9. The panel light emitter of claim 7 or 8, the partially reflective element comprising a layer laminated on the diffuser.

10. The panel light emitter of any preceding claim, the sources comprising side emitting sources arranged to emit predominantly in the plane of the panel.

11. The panel light emitter of claim 10, the sources comprising different coloured LED sources.

12. The panel light emitter of any preceding claim, a depth of the cavity normal to a plane of the panel being less than 35mm.

13. The panel light emitter of any preceding claim, the partially reflective element can be arranged to reflect a proportion of the incident light, the proportion being any of: at least 70%, at least 80% or at least 90%, or at least 95%.

14. A display device having a light modulator (60) and a panel light emitter of any preceding claim.
